# EUROPÄISCHE PATENTSCHRIFT

(11) **EP 1 960 760 B1**
(45) Veröffentlichungstag und Bekanntmachung des Hinweises auf die Patenterteilung: **11.07.2018**
(21) Anmeldenummer: 06817490.3
(22) Anmeldetag: 15.12.2006
(51) Int. Cl.: G01N 21/64

(54) **VERFAHREN UND VORRICHTUNG ZUR BESTIMMUNG DER FLUORESZENZ EINER PROBE SOWIE VERWENDUNG DERSELBEN**
METHOD AND DEVICE FOR DETERMINING THE FLUORESCENCE OF A SAMPLE AND USE THEREOF
PROCEDE ET DISPOSITIF DE DETERMINATION DE LA FLUORESCENCE D'UN ÉCHANTILLON ET UTILISATION DE CE PROCEDE ET DE CE DISPOSITIF

(30) Priorität: 16.12.2005 AT 20142005
(43) Veröffentlichungstag der Anmeldung: 27.08.2008
(73) Patentinhaber: Joanneum Research Forschungsgesellschaft mbH, 8010 Graz (AT)
(72) Erfinder: BIZZARRI, Alessandro, A-8045 Graz (AT); KONRAD, Christian, A-8010 Graz (AT); RIBITSCH, Volker, A-8010 Graz (AT)
(74) Vertreter: Dilg, Haeusler, Schindelmann Patentanwaltsgesellschaft mbH
(86) Internationale Anmeldenummer: PCT/AT2006/000517
(87) Internationale Veröffentlichungsnummer: WO 2007/068021

(56) Entgegenhaltungen:
- EP-A1- 2 256 480
- DE-C2- 19 849 585
- GB-A- 1 596 522
- US-A- 4 099 872
- US-A- 4 661 711

## Beschreibung

Die vorliegende Erfindung bezieht sich auf ein Verfahren zur Bestimmung der Fluoreszenz einer Probe, wobei die Probe mit einem Licht einer Wellenlänge bestrahlt wird, welche zur Anregung von Fluoreszenzlicht in der Probe geeignet ist, und das von der Probe emittierte Fluoreszenzlicht in einem Empfänger empfangen wird und in ein Meßsignal umgewandelt wird, wobei dem Empfänger zusätzlich ein Referenzlicht insbesondere zur Kompensierung von Umgebungseinflüssen zugeführt und ebenfalls in ein Referenz-Meßsignal umgewandelt wird. Die Erfindung bezieht sich weiters auf eine Vorrichtung zur Bestimmung der Fluoreszenz einer Probe, umfassend eine Lichtquelle zur Aussendung eines Lichts einer Wellenlänge, welche zur Anregung von Fluoreszenzlicht in der Probe geeignet ist, und einen Empfänger, welcher das von der Probe emittierte Fluoreszenzlicht empfängt und in ein Meßsignal umwandelt, wobei dem Empfänger zusätzlich ein Referenzlicht insbesondere zur Kompensierung von Umgebungseinflüssen zuführbar und von diesem in ein Referenz-Meßsignal umwandelbar ist.

Im Rahmen der vorliegenden Beschreibung soll unter dem Ausdruck "eine Wellenlänge" auch ein um eine zentrale und definierte Wellenlänge liegender, insbesondere enger Wellenlängenbereich verstanden werden, wie dies beispielsweise bei Verwendung einer Leuchtdiode bzw. LED der Fall ist.

Derartige Verfahren und Vorrichtungen sind beispielsweise der DD-A 229 220, der US-A 5 196 709 oder der DE-C 198 49 585 zu entnehmen.

Aus der GB 1 596 522 sowie der US 4 099 872 A ist jeweils ein Verfahren zur Bestimmung der Fluoreszenz einer Probe bekannt geworden, wobei die Probe mit einem von einer Lichtquelle ausgesandtem Licht einer Wellenlänge bestrahlt wird, welche zur Anregung von Fluoreszenzlicht in der Probe geeignet ist, und das von der Probe emittierte Fluoreszenzlicht in einem Photodetektor empfangen wird, wobei dem Photodetektor zusätzlich ein Referenzlicht insbesondere zur Kompensierung von Umgebungseinflüssen zugeführt wird, wobei der optische Weg des in die Probe eintretenden Anregungslichts und die Probe verlassenden Fluoreszenzlichts von dem optischen Weg des Referenzlichts zwischen Lichtquelle und Empfänger durch einen Strahlteiler bzw. ein Spiegelsystem getrennt wird.

Der US 4 661 711 A ist eine Vorrichtung zur Bestimmung der Fluoreszenz einer Probe zu entnehmen, bei welcher das für die Bestimmung der Fluoreszenz der Probe erforderliche Referenzlicht von einem fluoreszierenden Material, welches sowohl als Lichtleiter als auch als Fluoreszenzstandard dient, emittiert ist und in welcher das Anregungslicht mittels eines Strahlteilers in ein Referenzlicht und ein Anregungslicht getrennt ist.

Die Bestimmung der Fluoreszenz von spezifischen Molekülen wird zunehmend in sensorischen Anwendungen zur Bestimmung diverser Analyten eingesetzt. Dabei werden die Moleküle durch Bestrahlung mit Licht einer spezifischen Wellenlänge in einen angeregten Zustand versetzt. Die Rückkehr der Moleküle in den Grundzustand erfolgt durch Abstrahlung von Licht, welches eine höhere Wellenlänge als das Anregungslicht aufweist (Stoke's Shift). Zusätzlich ist diese Emission zeitlich versetzt. Informationen über die zu bestimmende Probe können durch Messung der Intensität oder der Abklingzeit des Fluoreszenzlichts gewonnen werden. Einsatzmöglichkeiten dieses Phänomens liegen in der Umweltanalytik, in der medizinischen Diagnostik, in der Überwachung von zahlreichen industriellen Prozessen und in einer Analyse im Labor.

Die einfachste Methode zur Bestimmung der Eigenschaften von Analyten mittels Fluoreszenzmessungen liegt in der Detektion der Intensität des vom Fluoreszenzmolekül emittierten Lichts. Für praktische Anwendungen hat diese Methode allerdings einige schwerwiegende Nachteile. So haben Auswaschungen oder ein Ausbleichen des Fluoreszenzfarbstoffs, sowie Fluktuationen der Lichtquelle und Nicht-Linearitäten der optischen Detektoren einen direkten Einfluß auf das Meßergebnis. Während Änderungen betreffend den Farbstoff nur durch Kalibration mit definierten Konzentrationen des spezifischen Analyten kompensiert werden können, bedarf es bezüglich der Instrumentierung oftmals aufwendiger Temperaturstabilisierungen oder optischer Komponenten, um diese Effekte so gering wie möglich zu halten.

Eine weitaus kompaktere Methode bietet die Bestimmung der Zeitverzögerung mit einer dominierenden Zeitkonstante τ des abgestrahlten Fluoreszenzlichts, welche auch als "Lebensdauer", "Decay Time", oder "Life Time" bezeichnet wird. Die Bestimmung der Zeitkonstante kann durch Messung der Abklingkonstante nach pulsförmiger Anregung (im Zeitbereich), oder durch die Messung der Phasenverschiebung bei sinusförmiger Anregung (im Frequenzbereich) erfolgen. Da die Bestimmung der Abklingzeitkonstante bzw. der Phasenverschiebung prinzipiell unabhängig von der emittierten Intensität ist und praktisch nur durch die nachfolgende Instrumentierung limitiert wird, können Effekte des Farbstoffs (z.B. Auswaschung, Ausbleichen) vernachlässigt werden. Die Bestimmung der Phasenverschiebung zur Erfassung der Änderungen von selektiven Farbstoffen hat sich in praktischen Umsetzungen aufgrund des geringeren instrumentellen Aufwands gegenüber einer Abklingzeitmessung durchgesetzt.

In jedem Fall ist es auch bei der Bestimmung der Phasenverschiebung nicht zuletzt aufgrund des Einsatzes in verschiedensten Umgebungen empfehlenswert, eine Referenzierung vorzunehmen, um Temperatureinflüsse, welche die aktiven optischen Komponenten sowie die Auswertelektronik betreffen, zu kompensieren. Als einfachste Variante zur Realisierung einer Referenzierung, welche diese Aufgaben erfüllt, hat sich eine Bestimmung einer Phasenverschiebung des Meßkreises ohne den selektiven Farbstoff erwiesen. Hierbei wird periodisch zwischen einer Signallichtquelle, welche die durch die Probe verursachte Phasenverschiebung bestimmt, und einer Referenzlichtquelle, welche die Phasenverschiebung der Instrumentierung bestimmt, umgeschaltet und die wahre Phasenverschiebung durch Subtraktion der Referenzphasenverschiebung von der Signalphasenverschiebung ermittelt.

Für Anwendungen in der Prozeßtechnik und in der medizinischen Diagnostik stellen Miniaturisierung, Automatisierung und geringe Kosten solcher Meßsysteme eine Voraussetzung für die Akzeptanz durch den Anwender dar. Aufwendige optische Anordnungen, welche insbesondere mit teuren optischen Filtern verbunden sind, stellen hier wesentliche Faktoren bzw. Nachteile dar.

Unabhängig von Referenzierungsmethoden und Stabilisierungstechniken ist das Verhältnis von Fluoreszenzlicht zu Anregungslicht klein und bedarf somit diverser optischer Methoden (optische Anordnung bzw. optische Filter) zur Separation des Lichts dieser beiden Lichtquellen.

Die vorliegende Erfindung zielt darauf ab, ausgehend von einem Verfahren sowie einer Vorrichtung der eingangs genannten Art einfache optische Anordnungen sowie Möglichkeiten zur Referenzierung zu bieten, und insbesondere unter Bereitstellung von konstruktiven, einfachen und somit kostengünstigen Ausbildungen eine genaue Auswertung zu ermöglichen. Diese Aufgabe wird durch das Verfahren nach Anspruch 1 gelöst. Mit dem erfindungsgemäßen Verfahren gelingt somit eine vereinfachte Auswertung insbesondere dahingehend, daß sowohl für das Anregungslicht als auch für das Referenzlicht eine gleiche Wellenlänge verwendet werden kann. Bei den zu kompensierenden Umgebungseinflüssen handelt es sich beispielsweise um Änderungen, welche aufgrund von Temperaturänderungen oder durch Toleranzen der jeweiligen Bauteile entstehen. Erfindungsgemäß können somit baugleiche Lichtquellen für Anregung und Referenzierung verwendet werden, was eine Verbesserung der Referenzierung ermöglicht, da beide identische optische und elektrische Eigenschaften aufweisen.

Für eine konstruktiv einfache Trennung der optischen Wege wird erfindungsgemäß bevorzugt vorgeschlagen, daß die Trennung der optischen Wege durch ein optisches Filter vorgenommen wird.

Für eine besonders zuverlässige Trennung der optische Wege für das Anregungslicht als auch das Referenzlicht wird gemäß einer weiters bevorzugten Ausführungsform vorgeschlagen, daß das Referenzlicht durch einen Lichtwellenleiter dem Empfänger zugeführt wird, wobei durch Einsatz eines derartigen Lichtwellenleiters sichergestellt werden kann, daß auch keinerlei Streulicht des Referenzlichts gegebenenfalls in die Probe eintritt und somit diese beeinflußt.

Zur besonders zuverlässigen Ansteuerung und zur Vereinfachung der nachfolgenden Auswertung insbesondere im Hinblick auf eine Phasenverschiebung wird gemäß einer weiters bevorzugten Ausführungsform vorgeschlagen, daß die Anregungslichtquelle und die Referenzlichtquelle von einem gemeinsamen Modulator angetrieben werden.

Wie oben bereits angedeutet, ist das Verhältnis von Fluoreszenzlicht zu Anregungslicht klein und es ist für eine entsprechende Auswertung eine an die Detektion im Empfänger anschließende an sich bekannte Verstärkungs- und Signalverarbeitung erforderlich, wobei in diesem Zusammenhang gemäß einer weiters bevorzugten Ausführungsform vorgeschlagen wird, daß in an sich bekannter Weise die vom Empfänger ausgegebenen Meßsignale in einem Verstärker verstärkt und nachfolgend in einer Signalverarbeitungseinheit verarbeitet und gegebenenfalls dargestellt werden.

Zur Lösung der eingangs genannten Aufgaben wird darüber hinaus eine Vorrichtung nach Anspruch 6 bereitgestellt. Für eine einfache und zuverlässige Trennung wird vorgeschlagen, daß zur Trennung der optischen Wege ein optisches Filter eingesetzt ist, wie dies einer bevorzugten Ausführungsform der erfindungsgemäßen Vorrichtung entspricht.

Für eine zuverlässige und einfache Ansteuerung dieser zwei identen Lichtquellen zur Bereitstellung einer jeweils gleichen Wellenlänge sowohl für das Anregungslicht als auch das Fluoreszenzlicht wird darüber hinaus bevorzugt vorgeschlagen, daß ein gemeinsamer Frequenzmodulator für die zwei Lichtquellen vorgesehen ist.

Für eine besonderes zuverlässige räumliche Trennung der optischen Wege von Referenzlicht und Anregungslicht wird gemäß einer weiters bevorzugten Ausführungsform vorgeschlagen, daß für die Zufuhr des Referenzlichts zu dem Empfänger ein Lichtleiter, insbesondere ein Faserkabel vorgesehen ist.

Zur Erzielung entsprechend starker und aussagekräftiger Signale wird darüber hinaus vorgeschlagen, daß in an sich bekannter Weise dem Empfänger ein Verstärker und eine Auswerte- bzw. Verarbeitungseinheit sowie gegebenenfalls eine Anzeigeeinheit nachgeschaltet ist, wie dies einer weiters bevorzugten Ausführungsform der erfindungsgemäßen Vorrichtung entspricht.

Zur Bereitstellung von zuverlässigen Lichtquellen, welche auch entsprechend kostengünstig herstellbar und miteinander abgleichbar sind, wird gemäß einer weiters bevorzugten Ausführungsform vorgeschlagen, daß die Lichtquellen von einer LED gebildet sind.

Eine Verwendung des erfindungsgemäßen Verfahrens und/oder der erfindungsgemäßen Vorrichtung erfolgt hierbei gemäß Anspruch 12 in einem Bioreaktor, in der chemischen und/oder biochemischen Analytik oder in der medizinischen Diagnostik.

Die Erfindung wird nachfolgend anhand von in der Zeichnung dargestellten Ausführungsbeispielen näher erläutert. In dieser zeigen:
Fig. 1 eine schematische Darstellung einer Vorrichtung zur Bestimmung der Fluoreszenz einer Probe zur Durchführung eines entsprechenden Verfahrens gemäß dem Stand der Technik;
Fig. 2 in einer zu Fig. 1 ähnlichen Darstellung eine erste Ausführungsform einer erfindungsgemäßen Vorrichtung zur Bestimmung der Fluoreszenz einer Probe zur Durchführung des erfindungsgemäßen Verfahrens;
Fig. 3 einen schematischen, konstruktiven Aufbau einer erfindungsgemäßen Vorrichtung unter Verwendung von zwei getrennten Lichtquellen;
Fig. 4 eine abgewandelte Ausführungsform einer erfindungsgemäßen Vorrichtung unter Verwendung von zwei getrennten Lichtquellen;
Fig. 5 eine weitere abgewandelte Ausführungsform einer erfindungsgemäßen Vorrichtung unter Verwendung von zwei getrennten Lichtquellen;
Fig. 6 in einer zu Fig. 2 ähnlichen Darstellung eine abgewandelte Ausführungsform einer Vorrichtung, die nicht von der Erfindung umfaßt ist, unter Verwendung einer gemeinsamen Lichtquelle für das Anregungslicht und das Referenzlicht sowie eines Umschalters; und
Fig. 7 eine schematische Darstellung ähnlich den Fig. 4 und 5 einer Ausführungsform einer Vorrichtung, die nicht von der Erfindung umfaßt ist, unter Verwendung einer gemeinsamen Lichtquellen und eines Umschalters.

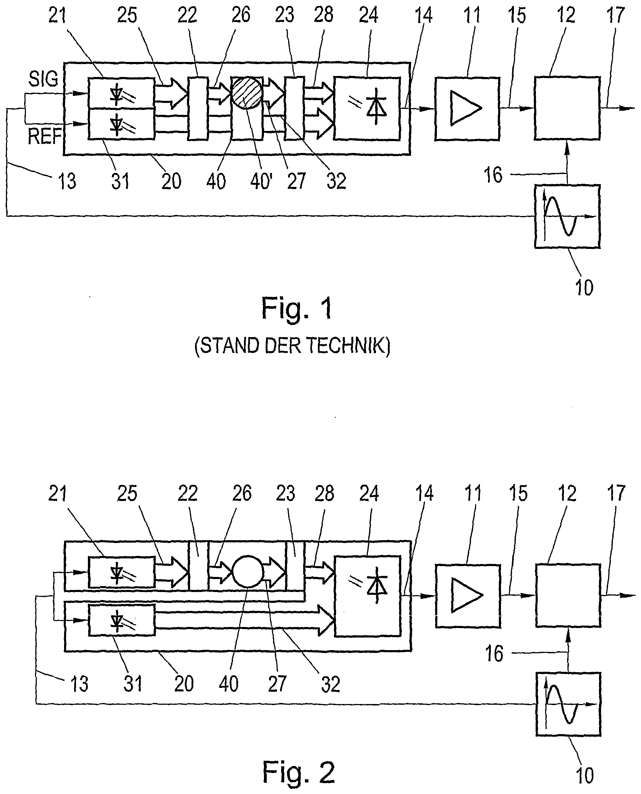

Eine Ausführungsform gemäß dem Stand der Technik, wobei sowohl das Anregungslicht als auch das Referenzlicht durch die Probe 40 hindurchgeleitet wird, ist in Fig. 1 dargestellt. Es wird mit einem Frequenzmodulator 10 ein sinusförmiges Modulationssignal mit der Frequenz f0 13 generiert, welches entweder eine Anregungslichtquelle 21 oder eine Referenzlichtquelle 31 versorgt. Beide Lichtquellen 21, 31 sind in eine optische Zelle in der Weise integriert, daß durch optische Filter 22, 23 und geeignete geometrische Anordnung das Anregungslicht 25 in hohem Maße daran gehindert wird, zum optischen Empfänger 24 zu gelangen, wobei die Probe 40 möglichst gut mit dem gefilterten Anregungslicht 26 angeregt wird. Des weiteren ist das optische Filter 23 in einer Weise ausgewählt, daß das Fluoreszenzlicht 27 möglichst ungehindert zum Detektor gelangt. Im Fall einer Referenzmessung gelangt das Referenzlicht 32 durch das optische Filter 23 zum Detektor, wobei darauf zu achten ist, daß dieses keine Fluoreszenz in der Probe 40 verursacht. Das optische Filter 23 hat somit die Aufgabe, einerseits das Fluoreszenzlicht 27 so gut wie möglich vom Anregungslicht 26 zu trennen und andererseits das eine unterschiedliche Wellenlänge aufweisende Referenzlicht 32 möglichst ungehindert passieren zu lassen. In jedem Fall erfolgt im optischen Empfänger 24 die Umwandlung des eingelangenden Lichts in ein elektrisches Meßsignal 14, welches in einem Verstärker 11 in der Weise verändert wird, daß das verstärkte elektrische Meßsignal 15 zur Verarbeitung in einer elektronischen Signalverarbeitung 12 geeignet ist und daraus gemeinsam mit dem elektrischen Referenzsignal 16 Fluoreszenzdaten 17 generiert werden können.

Eine derartige Referenzierungsmethode basiert zum einen auf der Trennung von optischem Anregungssignal 26 und Fluoreszenzsignal 27 durch das optische Filter 23 von dem Detektor 24 und zum zweiten auf einer möglichst guten Anpassung der Referenzlichtquelle 31 an die Anregungslichtquelle 21 hinsichtlich elektrischer Eigenschaften und Temperaturverhalten, wobei eine geeignete geometrische Anordnung der optischen Komponenten gegeben sein muß.

In Fig. 1 ist der Teilbereich der Probe, in welchem durch das Anregungslicht eine Anregung erfolgt, so daß in weiterer Folge das Fluoreszenzlicht 28 austritt, durch einen schraffierten Bereich 40' angedeutet.

Bei dieser bekannten Ausführungsform gemäß dem Stand der Technik ist insbesondere die Tatsache nachteilig, daß Anregungslicht der Lichtquelle 21 als auch das Referenz- bzw. Bezugslicht der Lichtquelle 31 unterschiedliche Wellenlängen aufweisen, so daß zusätzliche Kompensationen zur Berücksichtigungen von Umgebungs- bzw. Umwelteinflüssen, beispielsweise Temperatur bei den unterschiedlichen Wellenlängen des Anregungslichts 25 als auch des Referenzlichts 32 erforderlich sind. Hiebei kann beispielsweise eine rote und eine grüne LED als Lichtquelle 21 bzw. 31 eingesetzt werden. Da Signal und Referenz unterschiedliche LEDs 21 bzw. 31 im Sinne der Lichtemission sind, ergeben sich physikalisch auch andere elektrische Eigenschaften, wie beispielsweise Junction Kapazität, Temperaturverhalten, etc., wodurch die Qualität der Referenzierung vermindert wird.

Bei der erfindungsgemäßen Ausführungsform gemäß Fig. 2 sind die Bezugszeichen für gleiche Bauteile der Ausführungsform gemäß Fig. 1 beigehalten worden. Es ist insbesondere ersichtlich, daß das durch die Lichtquelle 21 bereitgestellte Anregungslicht 25, welches in weiterer Folge, wie bei der Ausführungsform gemäß Fig. 1 durch das Filter 22 und durch die Probe 40 hindurchtritt, in welcher eine Anregung erfolgt, wonach das Fluoreszenzlicht 27 austritt und in das Filter 23 gelangt, worauf es wiederum als gefiltertes Fluoreszenzlicht 28 dem Detektor bzw. optischen Empfänger 24 zugeführt wird.

Die Trennung zwischen dem Anregungslicht 25 bzw. dem nach Durchtritt durch die Probe resultierenden Fluoreszenzlicht 27 bzw. 28 von dem Referenzlicht 32 erfolgt dadurch, daß das Filter 23 zu einer räumlichen Trennung der Lichtwege 25, 27 und 28 bzw. 32 ausgestaltet ist. Es ist hiebei vorgesehen, daß es zu keinen Reflexionen des Referenzlichts 32 zur Probe 40 kommen kann, wodurch diese wiederum angeregt und Fluoreszenzlicht 27 emittieren würde. Die Gestaltung des optischen Filters 23 muß eine Transmission von Referenzlicht 32 zur Probe verhindern, eine Transmission des Anregungslichts 26 zum optischen Empfänger 24 verhindern, jedoch eine Transmission des Fluoreszenzlichts 27 zum optischen Empfänger 24 in hohem Maße erlauben.

Die Auswertung der im optischen Empfänger bzw. Detektor 24 aufgenommenen Signale erfolgt wie bei der Ausführung gemäß dem Stand der Technik in Fig. 1 durch den nachgeschalteten Verstärker 11, die elektronische Signalverarbeitungseinheit 12 sowie eine mögliche Anzeige von Daten, welche wiederum mit 17 angedeutet ist.

Der Vorteil der Ausführungsform gemäß Fig. 2 durch Bereitstellung der Trennung der optischen Wege liegt vor allem darin, daß zwei idente Lichtquellen 21 und 31 verwendet werden können, so daß eine Referenzierung bzw. Auswertung vereinfacht ist oder gegenüber dem Stand der Technik gemäß Fig. 1 genauer bzw. präziser durchgeführt werden kann, da zusätzliche Einflüsse durch die Verwendung zwei unterschiedlichen Lichtquellen mit unterschiedlicher Wellenlänge gemäß dem Stand der Technik und die daraus resultierenden, gegebenenfalls zusätzlich erforderlichen Kompensationen vermieden werden können.

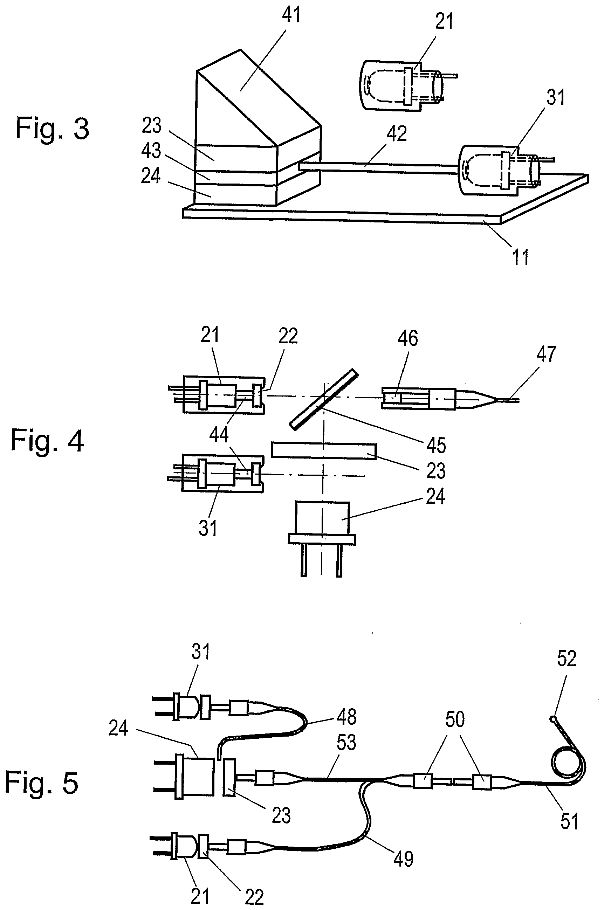

Bei der in Fig. 3 dargestellten Ausführungsform, welche auf dem schematischen Diagramm von Fig. 2 basiert, ist ersichtlich, daß die beispielsweise von einer LED gebildete Lichtquelle 21 ihr Licht auf ein Prisma 41 lenkt, wobei dem Prisma 41 eine nicht näher dargestellte Probe nachgeschaltet ist.

Demgegenüber wird Licht von der Lichtquelle 31 zur Bereitstellung des Referenz- bzw. Bezugslichts über ein Faserkabel 42 einem von einer Glasplatte gebildeten Element 43 zugeführt, welches von dem Prisma 41 durch das wiederum mit 23 bezeichnete Filter zur Trennung der optischen Wege zwischen Signallicht und Referenzlicht zwischengeschaltet ist, wobei das durch das Faserkabel 42 zugeführte Referenzlicht direkt dem Detektor bzw. optischen Empfänger 24 zugeführt wird, wobei ein Vorverstärker, welcher nachgeschaltet ist, wiederum mit 11 angedeutet ist.

Bei einer abgewandelten Ausführungsform gemäß Fig. 4 ist ersichtlich, daß von der wiederum mit 21 bezeichneten Lichtquelle bereitgestelltes Anregungslicht, welches nach Durchtritt durch eine sogenannte Grin-Linse 44 das Anregungsfilter 22 passiert, durch ein dichroitisches Filter 45 hindurchtritt und nach Durchtritt durch eine weitere Grin-Linse 46 einer schematisch mit 47 angedeuteten sensitiven Schicht bzw. zu untersuchenden Probe zugeführt wird. Das von der Probe 47 ausgesandte Fluoreszenzlicht wird über das dichroitischen Filter 45 nach Durchtritt durch ein wiederum mit 23 bezeichnetes Emissionsfilter dem Photodetektor bzw. optischen Empfänger 24 zugeführt.

Im Gegensatz dazu erfolgt die Zufuhr von von der Lichtquelle 31 bereitgestelltem Referenzlicht unmittelbar zu dem Photodetektor 24, wobei zur Trennung der optischen Wege wiederum das Filter 23 verwendet wird.

In Fig. 5 ist eine weitere abgewandelte Ausführungsform unter Verwendung von zwei identen Lichtquellen 21 und 31 angedeutet, wobei die Lichtquelle 31 zur Bereitstellung des Referenzlichts über einen Lichtwellenleiter 48 unmittelbar mit dem wiederum mit 24 bezeichneten optischen Empfänger bzw. Detektor gekoppelt ist.

Demgegenüber wird von der Anregungslichtquelle 21 bereitgestelltes Licht nach Passieren des Filters 22 ebenfalls über einen Lichtwellenleiter 49 und schematisch angedeutete Kopplungen 50 in weiterer Folge über einen weiteren Lichtwellenleiter 51 der zu überprüfenden Probe 52, beispielsweise einer O₂-sensitiven Schicht zugeführt. Über die Lichtwellenleiter 51 sowie 53 erfolgt eine Zufuhr des Fluoreszenzlichts nach einem Passieren des Emissionsfilters 23 wiederum zu dem Detektor bzw. optischen Empfänger 24.

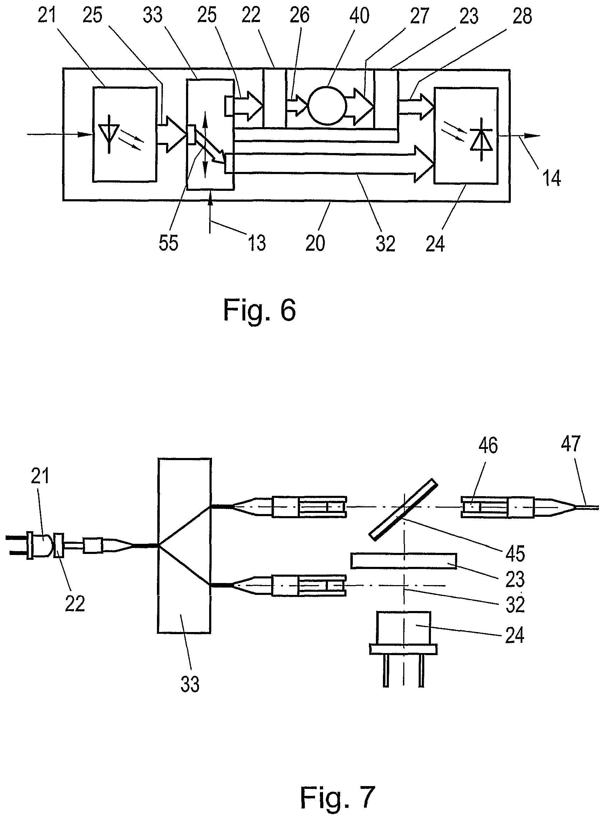

In Fig. 6 ist eine abgewandelte Ausführungsform, welche nicht von der Erfindung umfaßt ist, dargestellt, wobei lediglich eine einzige, wiederum mit 21 bezeichnete Lichtquelle verwendet wird, von welcher mit 25 bezeichnetes Licht eine Umschalteinrichtung bzw. einem Umschalter 33 zugeführt wird. In diesem Umschalter erfolgt entweder eine Weiterleitung des von der Lichtquelle 21 bereitgestellten Anregungslichts zu dem Filter 22 und in weiterer Folge in die Probe 40, aus welcher Fluoreszenzlicht 27 austritt, welches nach einem Passieren des Filters 23 als Fluoreszenzlicht 28 dem wiederum mit 24 bezeichneten optischen Empfänger bzw. Fotodetektor zur weiteren Verarbeitung zugeführt wird.

Wie in Fig. 6 durch den Doppelpfeil 55 angedeutet, erfolgt in der Umschalteinrichtung 33 eine Umschaltung zwischen dem Lichtweg des Anregungslichts 25 durch die Probe 40 und einem wiederum mit 32 bezeichneten Pfad des Referenzlichts, welches direkt dem optischen Empfänger bzw. Fotodetektor 24 zugeführt wird.

Die Kopplung mit einer nicht näher dargestellten Treiberschaltung bzw. einem Frequenzmodulator ist in Fig. 6 wiederum 13 bezeichnet.

Der Vorteil dieser Ausführungsform liegt vor allem darin, daß mit lediglich einer einzigen Lichtquelle 21 das Auslangen gefunden werden kann, so daß auch nur eine Treiberschaltung erforderlich ist. Es ergibt sich somit eine Verringerung des Aufwands durch Entfallen der getrennten Referenzlichtquelle, so daß eine präzisere bzw. genauere Auswertung insbesondere durch eine Eliminierung von gegebenenfalls bestehenden Bauteilunterschieden identer Lichtquellen, wie sie in Fig. 2 beispielsweise mit 21 und 31 bezeichnet sind, erzielbar ist. Diese Erhöhung der Genauigkeit überwiegt in den meisten Fällen den durch Vorsehen der Umschalteinrichtung bzw. des Umschalters 33 bedingten zusätzlichen Aufwand.

In der Darstellung gemäß Fig. 7, welche nicht von der Erfindung umfaßt ist, ist ersichtlich, daß nach Passieren eines Anregungsfilters 22 der Lichtstrahl der Umschalteinrichtung bzw. dem Umschalter 33 zur Verfügung gestellt wird, wobei das Licht auf dem optischen Pfad 32 des Referenzlichts wiederum unmittelbar dem Detektor bzw. optischen Empfänger 24 zugeführt wird.

Demgegenüber erfolgt nach einem Durchtritt durch ein wiederum mit 45 bezeichnetes dichroitisches Filter eine Zufuhr des Anregungslichts zu einer ähnlich wie bei der Ausführungsform gemäß Fig. 4 wiederum mit 47 bezeichneten sensitiven Schicht. Das darin gebildete Fluoreszenzlicht wird neuerlich nach Passieren des dichroitischen Filters 45 und des Emissionsfilters 23 ebenfalls dem Photodetektor bzw. optischen Empfänger 24 zugeführt.

Es ist hiebei ersichtlich, daß insbesondere durch Bereitstellung lediglich einer einzigen Lichtquelle 21 der konstruktive Aufwand bei Erzielung einer höheren Auswertegenauigkeit verringert werden kann.

Eine bevorzugte Anwendung der in Fig. 2 bis 5 dargestellten Ausführungsformen erfolgt beispielsweise in einem Bioreaktor, in einer chemischen und/oder biochemischen Analytik oder in der medizinischen Diagnostik.

## Patentansprüche

1. Verfahren zur Bestimmung der Fluoreszenz einer Probe, wobei die Probe (40, 47) mit einem Anregungslicht (25) einer Wellenlänge bestrahlt wird, welche zur Anregung von Fluoreszenzlicht (27, 28) in der Probe (40, 47) geeignet ist, und das von der Probe (40, 47) emittierte Fluoreszenzlicht (27, 28) in einem Empfänger (24) empfangen wird und in ein Messsignal umgewandelt wird, wobei dem Empfänger (24) zusätzlich ein Referenzlicht (32) insbesondere zur Kompensierung von Umgebungseinflüssen zugeführt und ebenfalls in ein Referenz-Messsignal umgewandelt wird, **dadurch gekennzeichnet, dass** der optische Weg des in die Probe (40, 47) eintretenden Anregungslichts (25) und die Probe (40, 47) verlassenden Fluoreszenzlichts (27, 28) von dem optischen Weg des eine gleiche Wellenlänge wie das Anregungslicht aufweisenden Referenzlichts zwischen einer das Anregungslicht (25) aussendenden Anregungslichtquelle (21) bzw. einer das Referenzlicht (32) aussendenden Referenzlichtquelle (31) und Empfänger (24) getrennt wird, wobei die Anregungslichtquelle (21) zur Bereitstellung des Anregungslichts (25) identisch ist zu und getrennt ist von der Referenzlichtquelle (31) zur Bereitstellung des Referenzlichts, wobei die Anregungslichtquelle (21) und die Referenzlichtquelle (31) baugleich sind und identische optische und elektrische Eigenschaften aufweisen.

2. Verfahren nach Anspruch 1, **dadurch gekennzeichnet, dass** die Trennung der optischen Wege (25, 27, 28, 32) durch ein optisches Filter (32) vorgenommen wird.

3. Verfahren nach Anspruch 1 oder 2, **dadurch gekennzeichnet, dass** das Referenzlicht (32) durch einen Lichtwellenleiter dem Empfänger (24) zugeführt wird.

4. Verfahren nach Anspruch 1, **dadurch gekennzeichnet, dass** die Anregungslichtquelle (21) und die Referenzlichtquelle (31) von einem gemeinsamen Modulator angetrieben werden.

5. Verfahren nach einem der Ansprüche 1 bis 4, **dadurch gekennzeichnet, dass** die vom Empfänger (24) ausgegebenen Messsignale in einem Verstärker (11) verstärkt und nachfolgend in einer Signalverarbeitungseinheit (12) verarbeitet und gegebenenfalls dargestellt werden.

6. Vorrichtung zur Bestimmung der Fluoreszenz einer Probe, umfassend:
eine Anregungslichtquelle (21) zur Aussendung von Anregungslicht (25) einer Wellenlänge, welche zur Anregung von Fluoreszenzlicht (27, 28) in der Probe geeignet ist,
eine Referenzlichtquelle (31) zur Bereitstellung von Referenzlicht und
einen Empfänger (24), welcher das von der Probe emittierte Fluoreszenzlicht (28) empfängt und in ein Messsignal umwandelt, wobei dem Empfänger (24) zusätzlich das Referenzlicht (32) insbesondere zur Kompensierung von Umgebungseinflüssen zuführbar und von diesem in ein Referenz-Messsignal umwandelbar ist,
**dadurch gekennzeichnet, dass** der optische Weg des in die Probe (40, 47) eintretenden Anregungslichts (25) und die Probe verlassenden Fluoreszenzlichts (27, 28) von dem optischen Weg (32) des eine gleiche Wellenlänge wie das Anregungslicht aufweisenden Referenzlichts zwischen der Anregungslichtquelle (21) bzw. der Referenzlichtquelle (31) und Empfänger (24) getrennt ist, wobei die Anregungslichtquelle (21) identisch ist zu und getrennt ist von der Referenzlichtquelle (31), wobei die Anregungslichtquelle (21) und die Referenzlichtquelle (31) baugleich sind und identische optische und elektrische Eigenschaften aufweisen.

7. Vorrichtung nach Anspruch 6, **dadurch gekennzeichnet, dass** zur Trennung der optischen Wege (25, 27, 28, 32) ein optisches Filter (23) eingesetzt ist.

8. Vorrichtung nach Anspruch 6, **dadurch gekennzeichnet, dass** ein gemeinsamer Frequenzmodulator (10) für die zwei Lichtquellen (21, 31) vorgesehen ist.

9. Vorrichtung nach einem der Ansprüche 6 bis 8, **dadurch gekennzeichnet, dass** für die Zufuhr des Referenzlichts zu dem Empfänger ein Lichtleiter (42, 48), insbesondere ein Faserkabel vorgesehen ist.

10. Vorrichtung nach einem der Ansprüche 6 bis 9, **dadurch gekennzeichnet, dass** dem Empfänger (24) ein Verstärker (11) und eine Auswerte- bzw. Verarbeitungseinheit (12) sowie gegebenenfalls eine Anzeigeeinheit (17) nachgeschaltet ist.

11. Vorrichtung nach einem der Ansprüche 6 bis 10, **dadurch gekennzeichnet, dass** die Anregungslichtquelle (21) und die Referenzlichtquelle (31) jeweils von einer LED gebildet sind.

12. Verwendung eines Verfahrens nach einem der Ansprüche 1 bis 5 und/oder einer Vorrichtung nach einem der Ansprüche 6 bis 11 in einem Bioreaktor, in der chemischen und/oder biochemischen Analytik oder in der medizinischen Diagnostik.

## Claims

1. A method for determining the fluorescence of a sample, wherein
the sample (40, 47) is irradiated with an excitation light (25) of a wavelength which is suitable to excite fluorescent light (27, 28) in the sample (40, 47), and
the fluorescent light (27, 28) emitted by the sample (40, 47) is received in a receiver (24) and is converted into a measurement signal,
wherein a reference light (32), in particular for compensating for ambient influences, is additionally fed to the receiver (24) and is likewise converted into a reference measurement signal,
**characterized in that** the optical path of the excitation light (25) entering the sample (40, 47) and of the fluorescent light (27, 28) leaving the sample (40, 47) is separated from the optical path of the reference light having the same wavelength as the excitation light, between an excitation light source (21) emitting the excitation light (25) or a reference light source (31) emitting the reference light (32) and the receiver (24),
wherein the excitation light source (21) for providing the excitation light (25) is identical with and separated from the reference light source (31) for providing the reference light,
wherein the excitation light source (21) and the reference light source (31) are identically constructed and exhibit identical optical and electrical characteristics.

2. The method according to claim 1, **characterized in that** the separation of the optical paths (25, 27, 28, 32) is effected by an optical filter (32).

3. The method according to claim 1 or 2, **characterized in that** the reference light (32) is fed to the receiver (24) through a light waveguide.

4. The method according to claim 1, **characterized in that** the excitation light source (21) and the reference light source (31) are driven by a common modulator.

5. The method according to any one of claims 1 to 4, **characterized in that** the measurement signals output by the receiver (24) are amplified in an amplifier (11) and subsequently processed in a signal processing unit (12) and optionally displayed.

6. A device for determining the fluorescence of a sample, comprising:
an excitation light source (21) for emitting excitation light (25) of a wavelength which is suitable to excite fluorescent light (27, 28) in the sample,
a reference light source (31) for providing reference light, and
a receiver (24) which receives the fluorescent light (28) emitted by the sample and converts it into a measurement signal,
wherein the reference light, in particular for compensating for ambient influences, is additionally feedable to the receiver and convertible into a reference measurement signal by the same,
**characterized in that** the optical path of the excitation light (25) entering the sample (40, 47) and the fluorescent light (27, 28) leaving the sample is separated from the optical path (32) of the reference light having the same wavelength as the excitation light, between the excitation light source (21) or the reference light source (31) and the receiver (24),
wherein the excitation light source (21) is identical with and separated from the reference light source (31),
wherein the excitation light source (21) and the reference light source (31) are identically constructed and exhibit identical optical and electrical characteristics.

7. The device according to claim 6, **characterized in that** an optical filter (23) is used for the separation of the optical paths (25, 27, 28, 32).

8. The device according to claim 6, **characterized in that** a common frequency modulator (10) is provided for the two light sources (21, 31).

9. The device according to any one of claims 6 to 8, **characterized in that** a light guide (42, 48), in particular a fiber cable, is provided for the supply of the reference light to the receiver.

10. The device according to any one of claims 6 to 9, **characterized in that** an amplifier (11) and an evaluation or processing unit (12) as well as, optionally, a display unit (17) are arranged downstream of the receiver (24).

11. The device according to any one of claims 6 to 10, **characterized in that** the excitation light source (21) and the reference light source (31) are both formed by an LED.

12. A use of the method according to any one of claims 1 to 5 and/or of the device according to any one of claims 6 to 11 in a bioreactor, in chemical and/or biochemical analytics or in medical diagnostics.

## Revendications

1. Procédé servant à déterminer la fluorescence d'un échantillon, l'échantillon (40, 47) étant exposé à une lumière d'excitation (25) d'une longueur d'onde, laquelle est adaptée pour exciter une lumière fluorescente (27, 28) dans l'échantillon (40, 47) et la lumière fluorescente (27, 28) émise par l'échantillon (40, 47) étant reçue dans un récepteur (24) et convertie en un signal de mesure, en outre une lumière de référence (32), en particulier servant à compenser des influences extérieures, étant amenée au récepteur (24) et également convertie en un signal de mesure de référence, **caractérisé en ce que** le chemin optique de la lumière d'excitation (25) entrant dans l'échantillon (40, 47) et de la lumière fluorescente (27, 28) quittant l'échantillon (40, 47) est séparé du chemin optique de la lumière de référence présentant une même longueur d'onde que celle de la lumière d'excitation entre une source de lumière d'excitation (21) envoyant la lumière d'excitation (25) ou une source de lumière de référence (31) envoyant la lumière de référence (32) et le récepteur (24), la source de lumière d'excitation (21) servant à fournir la lumière d'excitation (25) étant identique à la source de lumière de référence (31) servant à fournir la lumière de référence et séparée de celle-ci, la source de lumière d'excitation (21) et la source de lumière de référence (31) étant de structure identique et présentant des propriétés optiques et électriques identiques.

2. Procédé selon la revendication 1, **caractérisé en ce que** la séparation des chemins optiques (25, 27, 28, 32) est effectuée par un filtre (32) optique.

3. Procédé selon la revendication 1 ou 2, **caractérisé en ce que** la lumière de référence (32) est amenée au récepteur (24) par un guide d'ondes lumineuses.

4. Procédé selon la revendication 1, **caractérisé en ce que** la source de lumière d'excitation (21) et la source de lumière de référence (31) sont entraînées par un modulateur commun.

5. Procédé selon l'une quelconque des revendications 1 à 4, **caractérisé en ce que** les signaux de mesure émis par le récepteur (24) sont amplifiés dans un amplificateur (11) et sont par la suite traités et éventuellement représentés dans une unité de traitement de signaux (12).

6. Dispositif servant à déterminer la fluorescence d'un échantillon, comprenant :
une source de lumière d'excitation (21) servant à envoyer une lumière d'excitation (25) d'une longueur d'onde, laquelle est adaptée pour exciter une lumière fluorescente (27, 28) dans l'échantillon,
une source de lumière de référence (31) servant à fournir une lumière de référence et
un récepteur (24), qui reçoit la lumière fluorescente (28) émise par l'échantillon et la convertit en un signal de mesure, en outre la lumière de référence (32), en particulier servant à compenser des influences extérieures, pouvant être amenée au récepteur (24) et pouvant être convertie par ce dernier en un signal de mesure de référence,
**caractérisé en ce que** le chemin optique de la lumière d'excitation (25) entrant dans l'échantillon (40, 47) et de la lumière fluorescente (27, 28) quittant l'échantillon est séparé du chemin optique (32) de la lumière de référence présentant la même longueur d'onde que la lumière d'excitation entre la source de lumière d'excitation (21) ou la source de lumière de référence (31) et le récepteur (24), la source de lumière d'excitation (21) étant identique à la source de lumière de référence (31) et séparée de celle-ci, la source de lumière d'excitation (21) et la source de lumière de référence (31) étant de structure identique et présentant des propriétés optiques et électriques identiques.

7. Dispositif selon la revendication 6, **caractérisé en ce qu'**un filtre optique (23) est employé pour séparer les chemins optiques (25, 27, 28, 32).

8. Dispositif selon la revendication 6, **caractérisé en ce qu'**un modulateur de fréquence (10) commun est prévu pour les deux sources de lumière (21, 31).

9. Dispositif selon l'une quelconque des revendications 6 à 8, **caractérisé en ce qu'**un guide de lumière (42, 48), en particulier une fibre optique, est prévu pour l'amenée de la lumière de référence au récepteur.

10. Dispositif selon l'une quelconque des revendications 6 à 9, **caractérisé en ce qu'**un amplificateur (11) et une unité d'évaluation ou de traitement (12) ainsi qu'éventuellement une unité d'affichage (17) sont installés en aval du récepteur (24).

11. Dispositif selon l'une quelconque des revendications 6 à 10, **caractérisé en ce que** la source de lumière d'excitation (21) et la source de lumière de référence (31) sont formées respectivement par une DEL.

12. Utilisation d'un procédé selon l'une quelconque des revendications 1 à 5 et/ou d'un dispositif selon l'une quelconque des revendications 6 à 11 dans un bioréacteur, en chimie et/ou biochimie analytique ou dans les diagnostics médicaux.
